(19) Europäisches Patentamt
European Patent Office
Office européen des brevets

(11) **EP 2 757 518 A1**

(12) **EUROPEAN PATENT APPLICATION**

(43) Date of publication:
**23.07.2014 Bulletin 2014/30**

(51) Int Cl.:
***G06Q 40/04*** (2012.01)

(21) Application number: **13173201.8**

(22) Date of filing: **21.06.2013**

| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **19.01.2013 IN MU01792013**<br><br>(71) Applicant: **Tata Consultancy Services Limited**<br>**400021 Mumbay (IN)**<br><br>(72) Inventors:<br>• **Chellaboina, Vijaysekhar**<br>**500081 Serilingampally Mandal, Madhapur, Hyderabad (IN)** | • **Subramanian, Easwara Naga**<br>**500081 Serilingampally Mandal, Madhapur, Hyderabad (IN)**<br>• **Shikha, Deep**<br>**Gurgaon (IN)**<br>• **Bhat, Sanjay Purushottam**<br>**500081 Serilingampally Mandal, Madhapur, Hyderabad (IN)**<br><br>(74) Representative: **Jansen, Cornelis Marinus**<br>**V.O.**<br>**Johan de Wittlaan 7**<br>**2517 JR Den Haag (NL)** |
| --- | --- |

(54) **Globally optimum trading positions for path-dependent options**

(57) A trading position evaluation system (102) for evaluating trading positions that are globally optimum for a path-dependent European Contingent Claims (ECC) includes an option price determination module (216) configured to determine a current option price and a shifted option price of the path-dependent ECC based on ECC data (110) and market data (114). The current option price and the shifted option price are determined at a trading time instance, selected from amongst a plurality of trading time instances obtained from a trader, based on at least one discrete-monitoring time instance occurring before the trading time instance. Based on the current option price and the shifted option price, a position evaluation module (116) evaluates a trading position in an underlying asset of the path-dependent ECC at the trading time instance that minimizes global variance of profit and loss to the trader.

Fig. 2

**Description**

TECHNICAL FIELD

The present subject matter relates, in general, to a path-dependent European Contingent Claim and, in particular, to a system and a computer-implemented method for evaluating globally optimum trading positions for the path-dependent European Contingent Claim.

BACKGROUND

In today's competitive business environment, investment banks make profit by trading financial instruments, such as derivatives. A derivative is a contract between two parties, namely, a buyer and a seller. The seller of the contract is obligated to deliver to the buyer, a payoff that is contingent upon the performance of an underlying asset. In one example, a derivative may be an option written on the underlying asset. The underlying asset may be a stock, a currency, or a commodity. In some derivatives, payoffs have to be delivered at a fixed time to maturity. Such derivatives are in general known as European Contingent Claims (ECC). The ECC may be a European call or put option. Further, the ECC may be a path-dependent option, which means its payoff, in principle, could depend on historical prices of the underlying asset between time of initiation and time to maturity of the ECC. In practice though, the payoff depends on certain discrete time instances, between the time of initiation and the time to maturity of the ECC. In an example, a Cliquet option is a path-dependent option consisting of a plurality of forward start plain vanilla options expiring at different time to maturities. Path-dependent European Contingent Claims (ECCs) in general include path-independent ECCs whose payoff depend on the price of the underlying asset just at the time to maturity.
Selling or buying an option always implies some exposure to financial risk. In case of the European call option, the holder of an option pays a premium to buy the underlying asset at a strike price at the time of maturity of the option. The strike price is the contracted price at which the underlying asset can be purchased or sold at the time of maturity of the option. If the market price of the underlying asset exceeds the strike price, it is profitable for the holder of the option to buy the underlying asset from the option seller, and then sell the underlying asset at the market price to make a profit. Since the European call option provides to its buyer, the right, but not the obligation to buy, the buyer may thus have a chance to make a potentially infinite profit at the cost of losing the amount which he has paid for the option, i.e., the premium. The seller, on the other hand, has an obligation to sell the underlying asset to the holder at the strike price, which may be less than the market price of the underlying asset on the date of maturity of the option. Therefore, for an option seller the amount at risk is potentially infinite due to the uncertain nature of the price of the underlying asset. Thus, option sellers typically use various hedging strategies to minimize such risks.

SUMMARY

This summary is provided to introduce concepts related to evaluating globally optimum trading positions for path-dependent options. These concepts are further described below in the detailed description. This summary is not intended to identify essential features of the claimed subject matter nor is it intended for use in determining or limiting the scope of the claimed subject matter.
A trading position evaluation system for evaluating trading positions that are globally optimum for a path-dependent European Contingent Claim (ECC) includes an option price determination module configured to determine a current option price and a shifted option price of the path-dependent ECC based on ECC data and market data. The ECC data includes data associated with the path-dependent ECC and an underlying asset of the path-dependent ECC, and the market data comprises annualized volatility of the underlying asset and risk-free interest rate of market. The current option price and the shifted option price are determined at a trading time instance, selected from amongst a plurality of trading time instances obtained from a trader, based on at least one discrete-monitoring time instance occurring before the trading time instance. Based on the current option price and the shifted option price, a position evaluation module evaluates a trading position in the underlying asset at the trading time instance that minimizes global variance of profit and loss to the trader.

BRIEF DESCRIPTION OF THE DRAWINGS

The detailed description is described with reference to the accompanying figure(s). In the figure(s), the left-most digit(s) of a reference number identifies the figure in which the reference number first appears. The same numbers are used throughout the figure(s) to reference like features and components. Some embodiments of systems and/or methods in accordance with embodiments of the present subject matter are now described, by way of example only, and with reference to the accompanying figure(s), in which:

Fig. 1 illustrates a network environment implementing a trading position evaluation system, according to an embodiment of the present subject matter.

Fig. 2 illustrates components of the trading position evaluation system, according to an embodiment of the present subject matter.

Fig. 3 illustrates a method for evaluating trading positions for a path-dependent European Contingent Claim (ECC), according to an embodiment of the present subject matter.

DETAILED DESCRIPTION

The trading of financial instruments, such as a path-dependent ECC and other derivatives over computer networks, such as the Internet has become a common activity. Generally, any form of market trading involves a risk and so does the ECC trading. The risk to an ECC buyer is limited to the premium he has paid to an ECC seller. However, the risk to the ECC seller is potentially unlimited, while the profit earned by the ECC seller from the ECC sale alone is limited to the premiums earned. Accordingly, the ECC seller may hedge his risk by trading in the underlying asset of the ECC. The trading decisions taken by the ECC seller constitute the seller's hedging strategy. The net profit/loss incurred by the ECC seller at the time of maturity from selling the ECC and the hedging process is called as the hedging error. The hedging error represents the ECC seller's risk that the ECC seller may incur even after hedging. A judicious choice of a hedging strategy by the ECC seller may lead to a lower residual risk.

Conventional hedging techniques are often postulated on unrealistic assumptions that trades can be made continuously in time. When such techniques are used in realistic settings involving multiple discrete trading time instances, they fail to provide trading positions that are globally optimum, i.e., the trading positions that minimize overall risk to a trader, for example the ECC seller at the time of maturity in this case. Further, some existing techniques involve large number of parameters and complex calculations, thereby consuming lot of time and effort and are prone to errors.

The present subject matter describes a system and a computer-implemented method for evaluating trading positions for a path-dependent European Contingent Claim (ECC). In one implementation, trading positions in underlying asset are evaluated at a plurality of discrete time instances starting from the time of initiation till the time of maturity of the ECC. Such trading positions provide minimum global variance of profit/loss to a trader, say, an ECC seller. The term global variance may be understood as variance of overall profit and loss to the trader starting from the time of initiation till the time of maturity of the path-dependent ECC.

The calculation of variance requires a choice of probability measure. A probability measure provides the probability of occurrence of different financial events, and represents the quantification of a subjective view of the relative likelihoods of various future events/scenarios. Each market player may use a different probability measure reflecting his or her own subjective views. The collective subjective perception of all the market players is captured by the so-called market probability measure. Owing to the large number of market players and constantly changing subjective views, it is very difficult to characterize the market probability measure. An alternative is the risk-neutral probability measure (referred to as simply a risk-neutral measure hereinafter), which is conveniently characterized by the property that the expected rate of return of any market asset in the risk-neutral measure equals the risk-free interest rate offered by the economy. Moreover, as per the theory of asset pricing, the risk-neutral measure determines the prices of all derivative assets in the market.

As described previously, the present subject matter, involves evaluating trading positions for a path-dependent ECC. The trading positions evaluated by the present system and method minimize the global variance of the profit and loss to a trader in the risk-neutral measure. The system as described herein is a trading position evaluation system.

Initially, a database for storing data associated with the path-dependent ECC is maintained according to one implementation. The database can be an external repository associated with the trading position evaluation system, or an internal repository within the trading position evaluation system. In the description hereinafter, a path-dependent ECC is referred to as ECC, and the data associated with the path-dependent ECC is referred to as ECC data. The ECC data may include the ECC defined by its payoff, time of initiation, time to maturity, a plurality of discrete-monitoring time instances that lie between the time of initiation and time to maturity of the ECC, premium, price of the underlying asset of the ECC at the time of initiation known as spot price, strike price of the ECC, and current market prices of plain vanilla call and put options written on the underlying asset of the ECC with the same time to maturity. In one example, the ECC data stored in the database may be obtained from the users, such as traders.

In the above mentioned implementation, the database is further populated with historical data including historical market prices of the underlying asset of the ECC. The historical market prices for the underlying asset can be automatically obtained from a data source, such as National Stock Exchange (NSE) website at regular time intervals, for example, at the end of the day and stored into the database. The data stored in the database may be retrieved whenever the trading positions are to be evaluated. Further, the data contained within such database may be periodically updated, whenever required. For example, new data may be added into the database, existing data can be modified, or non-useful data may be deleted from the database.

In one implementation, the volatility of the underlying asset of the ECC is computed based on the historical data associated with the underlying asset. To compute the volatility, historical market prices of the underlying asset for a predefined period, say, past two years, are retrieved from the database and log-returns are computed for the underlying asset based on the retrieved historical market prices. Thereafter, log-returns are fitted to a best-fit distribution to generate a plurality of scenarios. The best-fit distribution may be a Normal distribution, a Poisson distribution, a T-distribution, or any other known distribution that fits best to the log-returns. The scenarios, thus generated, may include already existing scenarios that have occurred in the past and other scenarios that have not existed in the past but may have a likelihood of occurring in the future. The scenarios, thus generated, are fitted to a normal distribution to compute the volatility of the underlying asset. The computed volatility is thereafter annualized.

Further, a risk-free interest rate of the market is computed based upon the retrieved ECC data. The computed annualized volatility and the risk-free interest rate are stored in the database as market data. The database, thus, contains the ECC data, the historical data, and the market data. The data contained in the database can be retrieved by the trading position evaluation system for the purpose of evaluating trading positions. In one implementation, the market data, such as annualized volatility and risk-free interest rate can also be computed in real-time during evaluation of the trading position. The manner in which evaluation of trading position takes place is described henceforth.

A trader may provide a plurality of trading time instances starting from the time of initiation till the time of maturity of the ECC as an input to the trading position evaluation system for trading of an underlying asset. Such trading time instances are the discrete time instances at which the trader may trade the underlying asset of the ECC.

Upon receiving trader's input, such as trading time instances, the trading position evaluation system retrieves the ECC data and the market data associated with the underlying asset from the database. For each of the trading time instances specified by the trader, the trading position evaluation system then evaluates a trading position that provides minimum global variance of profit and loss to the trader.

To evaluate the trading position at a particular trading time instance, the trading position evaluation system determines a current option price and a shifted option price of the ECC based on the retrieved ECC data and the market data. The determination of the current option price and the shifted option price depends on at least one discrete-monitoring time instance occurring before that particular trading time instance. Such a determination of the current option price and the shifted option price may take place using any known option pricing method and, in one implementation, may take place using a Black-Scholes pricing method or a Monte-Carlo pricing method. Subsequently, the trading position in the underlying asset is evaluated based on the determined current option price and the shifted option price. The trading position conveys to the trader of the ECC, the number of units of the underlying asset to be held by the trader of the ECC at a particular trading time instance until the next trading time instance.

Thus, the trading position evaluated at each of the specified trading time instances starting from the time of initiation of the ECC till the time to maturity when taken together allows the trader to achieve minimum variance of overall profit and loss to the trader, such as an ECC seller, at the time of maturity. As mentioned previously, such a variance of overall profit and loss from the time of initiation till the time of maturity is known as global variance. Thus, minimum global variance of profit and loss can be achieved by evaluating the trading positions at different trading time instances. Therefore, a risk incurred by the trader, especially the ECC seller, at the time of maturity is minimized. The ECC seller, for example, may be able to liquidate the underlying asset at the time of maturity in order to deliver the payoff to the ECC buyer at a minimum risk.

The system and the method described according to the present subject matter, evaluates the trading positions based on a simple analytical closed-form expression, which is provided in the later section. The trading positions evaluated by the system and the method efficiently minimize risk exposure to the traders. Based on the trading positions, a trader would know how many units of the underlying asset should be held at each trading time instance so that the overall risk exposure to the trader at the time of maturity of the ECC is minimized.

The following disclosure describes a system and a method of evaluating the trading positions for a path-dependent European Contingent Claim (ECC) that are globally optimum in the risk-neutral measure. While aspects of the described system and method can be implemented in any number of different computing systems, environments, and/or configurations, embodiments for the information extraction system are described in the context of the following exemplary system(s) and method(s).

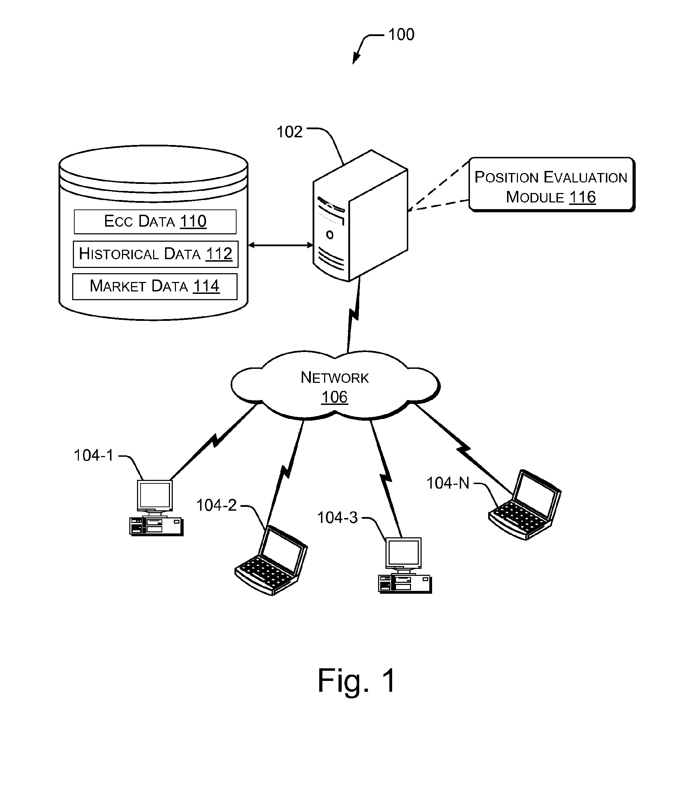

Fig. 1 illustrates a network environment 100 implementing a trading position evaluation system 102, in accordance with an embodiment of the present subject matter. In one implementation, the network environment 100 can be a public network environment, including thousands of personal computers, laptops, various servers, such as blade servers, and other computing devices. In another implementation, the network environment 100 can be a private network environment with a limited number of computing devices, such as personal computers, servers, laptops, and/or communication devices, such as mobile phones and smart phones.

The trading position evaluation system 102 is communicatively connected to a plurality of user devices 104-1, 104-2, 104-3...104-N, collectively referred to as user devices 104 and individually referred to as a user device 104, through a network 106. In one implementation, a plurality of users, such as traders may use the user devices 104 to communicate with the trading position evaluation system 102.

The trading position evaluation system 102 and the user devices 104 may be implemented in a variety of computing devices, including, servers, a desktop personal computer, a notebook or portable computer, a workstation, a mainframe computer, a laptop and/or communication device, such as mobile phones and smart phones. Further, in one implementation, the trading position evaluation system 102 may be a distributed or centralized network system in which different computing devices may host one or more of the hardware or software components of the trading position evaluation system 102.

The trading position evaluation system 102 may be connected to the user devices 104 over the network 106 through one or more communication links. The communication links between the trading position evaluation system 102 and the user devices 104 are enabled through a desired form of communication, for example, via dial-up modem connections, cable links, digital subscriber lines (DSL), wireless, or satellite links, or any other suitable form of communication.

The network 106 may be a wireless network, a wired network, or a combination thereof. The network 106 can also be an individual network or a collection of many such individual networks, interconnected with each other and functioning as a single large network, e.g., the Internet or an intranet. The network 106 can be implemented as one of the different types of networks, such as intranet, local area network (LAN), wide area network (WAN), the internet, and such. The network 106 may either be a dedicated network or a shared network, which represents an association of the different types of networks that use a variety of protocols, for example, Hypertext Transfer Protocol (HTTP), Transmission Control Protocol/Internet Protocol (TCP/IP), etc., to communicate with each other. Further, the network 106 may include network devices, such as network switches, hubs, routers, for providing a link between the trading position evaluation system 102 and the user devices 104. The network devices within the network 106 may interact with the trading position evaluation system 102, and the user devices 104 through the communication links.

The network environment 100 further comprises a database 108 communicatively coupled to the trading position evaluation system 102. The database 108 may store all data inclusive of data associated with a path-dependent ECC and its underlying asset sold by a trader, interchangeably referred to as an ECC seller in the present description. For example, the database 108 may store an ECC data 110, a historical data 112, and a market data 114. As indicated previously, the ECC data 110 include, but is not limited to, a path-dependent ECC defined by its payoff, time of initiation, time to maturity, a plurality of discrete-monitoring time instances that lie between the time of initiation and time to maturity of the path-dependent ECC, premium, spot price of the underlying asset, strike price of the path-dependent ECC, and current market prices of plain vanilla call and put options written on the underlying asset of the path-dependent ECC with the same time to maturity. The historical data 112 includes historical market prices of the underlying asset of the path-dependent ECC, and the market data 114 includes annualized volatility of the underlying asset and risk-free interest rate of the market.

Although the database 108 is shown external to the trading position evaluation system 102, it will be appreciated by a person skilled in the art that the database 108 can also be implemented internal to the trading position evaluation system 102, wherein the ECC data 110, the historical data 112, and the market data 114 may be stored within a memory component of the trading position evaluation system 102.

According to an implementation of the present subject matter, the trading position evaluation system 102 includes a position evaluation module 116 that retrieves the ECC data 110 and the market data 114 from the database 108 and evaluates trading positions in the underlying asset at a plurality of trading time instances. To evaluate the trading position at a particular trading time instance, the trading position evaluation system 102 determines a current option price and a shifted option price of the path-dependent ECC based on the retrieved ECC data 110 and the market data 114. The determination of the current option price and the shifted option price is based on at least one discrete-monitoring time instance occurring before that particular trading time instance.

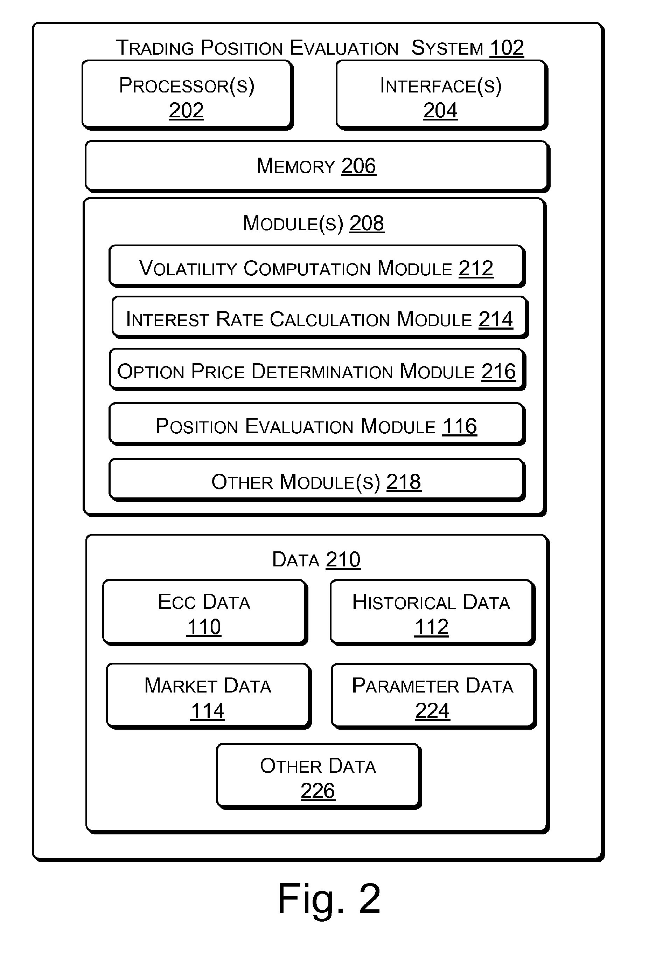

The trading positions evaluated by the trading position evaluation system 102 are globally optimum in the risk-neutral measure. Such trading positions are interchangeably referred to as globally optimum trading positions. The trading position is indicative of the number of units of the underlying asset to be held by the seller of the path-dependent ECC from a particular trading time instance until the next trading time instance. Such a trading position minimizes overall risk to the seller starting from the time of initiation till the time of maturity of the path-dependent ECC. The manner in which the trading position evaluation system 102 evaluates the trading positions is explained in greater detail according to the Fig. 2.

Fig. 2 illustrates various components of the trading position evaluation system 102, according to an embodiment of the present subject matter.

In said embodiment, the trading position evaluation system 102 includes one or more processor(s) 202, a memory 206 coupled to the processor(s) 202, and interface(s) 204. The processor(s) 202 may be implemented as one or more microprocessors, microcomputers, microcontrollers, digital signal processors, central processing units, state machines, logic circuitries, and/or any devices that manipulate signals based on operational instructions. Among other capabilities, the processor(s) 202 are configured to fetch and execute computer-readable instructions and data stored in the memory 206.

The interface(s) 204 may include a variety of software and hardware interfaces, for example, the interface(s) 204 may enable the trading position evaluation system 102 to communicate over the network 106, and may include one or more interface for peripheral device(s), such as a keyboard, a mouse, an external memory, a printer, etc. Further, the interface(s) 204 may include ports for connecting the trading position evaluation system 102 with other computing devices, such as web servers and external databases. The interface(s) 204 may facilitate multiple communications within a wide variety of protocols and networks, such as a network, including wired networks, e.g., LAN, cable, etc., and wireless networks, e.g., WLAN, satellite, etc.

The memory 206 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The trading position evaluation system 102 also includes module(s) 208 and data 210.

The module(s) 208 include routines, programs, objects, components, data structures, etc., which perform particular tasks or implement particular abstract data types. The module(s) 208 further include, in addition to the position evaluation module 116, a volatility computation module 212, an interest rate calculation module 214, an option price determination module 216, and other module(s) 218.

The data 210 serves, amongst other things, as a repository for storing data processed, received and generated by one or more of the modules 208. The data 210 includes the ECC data 110, the historical data 112, and the market data 114, parameter data 224, and other data 226. The ECC data 110 contains data associated with a path-dependent European Contingent Claim (ECC). In the description hereinafter, a path-dependent ECC is referred to as ECC. The ECC data 110 contains the ECC defined by its payoff, time of initiation, time to maturity of the ECC, a plurality of discrete-monitoring time instances that lie between the time of initiation and time to maturity of the ECC, its premium, spot price, strike price, and current market price of the plain vanilla call and put options written on an underlying asset of the ECC with the same time to maturity. The historical data 112 includes historical market prices of the underlying asset of the ECC. The market data 114 includes annualized volatility and risk-free interest rate. The parameter data 224 includes current option price and shifted option price of the ECC. The other data 226 includes data generated as a result of the execution of one or more other modules 218.

In the present embodiment, the ECC data 110, the historical data 112, and the market data 114 are depicted to be stored within the data 210, which is a repository internal to the trading position evaluation system 102. However, as described in the previous embodiment, the ECC data 110, the historical data 112, and the market data 114 may also be stored in the database 108 that is external to the trading position evaluation system 102.

According to the present subject matter, the volatility computation module 212 retrieves historical data 112 for a predefined period, for example, past one year, from the data 210. As described previously, the historical data 112 includes historical market prices of the underlying asset. Based on the retrieved historical data 112, the volatility computation module 212 computes log-returns of the underlying asset. In one implementation, volatility computation module 212 computes the log-returns using the equation (1) provided below:

$$R_k = log\ \frac{S_{k+1}}{S_k}, \quad k \in \{1, ..., m-1\} \qquad \qquad .... (1)$$

wherein, $R_k$ represents a log-return of the underlying asset for $k_{th}$ period,
$S_k$ represents the historical market price of the underlying asset for $k_{th}$ period, and
m represents a part of the historical data 112.

Subsequent to computing the log-returns, the volatility computation module 212 is configured to fit the log-returns for the underlying asset to a best-fit distribution. The best-fit distribution may be a Normal distribution, a Poisson distribution, a T-distribution, or any other known distribution that fits best to the log-returns, to generate a plurality of scenarios. The volatility computation module 212 then fits the generated scenarios to a normal distribution to compute volatility of the underlying asset. The computed volatility of the underlying asset is thereafter annualized. Further, the interest rate calculation module 214 of the trading position evaluation system 102 is configured to retrieve the ECC data 110 and compute the risk-free interest rate of the market based on the retrieved ECC data 110. According to one implementation, the interest rate calculation module 214 computes the risk-free interest rate using the equation (2) provided below:

$$r = \frac{1}{T} ln \frac{K}{S_0 - C + P} \qquad \qquad \text{.... (2)}$$

*wherein, r represents the risk-free interest rate,*
*C and P represent the current market prices of plain vanilla call and put option*
*respectively, written on the underlying asset of the path-dependent ECC,*
*K represents the strike price of the plain vanilla call and put option,*
*T represents the time to maturity, and*
*$S_0$ represents the spot price of the underlying asset of the plain vanilla call and put option.*

The annualized volatility *(σ)* and risk-free interest rate *(r)* are stored as the market data 114 and can be retrieved by the trading position evaluation system 102 while evaluating the trading positions. Alternatively, the annualized volatility *(σ)* and risk-free interest rate *(r)* may be computed in real-time during evaluation of the trading positions. The manner in which the trading position evaluation system 102 evaluates the trading positions in the underlying asset of the ECC is described henceforth.

The trading position evaluation system 102 receives a plurality of trading time instances from a trader starting from the time of initialization till the time to maturity of the ECC. The trading time instances are the time instances at which the trader would like to trade. In the context of the present subject matter, the trading time instances are mathematically represented by the expression (3).

$$\{T_0, \ T_1, \ldots, T_n\} \qquad \qquad \text{.... (3)}$$

In the above equation, *($T_0$)* represents the first trading time instance, which is also referred to as time of initiation, and *($T_n$)*, represents last trading time instance, which is also referred to as time of maturity.

At each of the trading time instances, the option price determination module 216 determines a current option price and a shifted option price of the ECC, based on the ECC data 110 and the market data 114. The determination of the current option price and the shifted option price is also based on at least one discrete-monitoring time instance occurring before a trading time instance at which the option price determination module 216 determines the current option price and the shifted option price of the ECC. In the context of the present subject matter, the discrete-monitoring time instances are mathematically represented by the expression (4).

$$\boldsymbol{t} = \{t_0, \ t_1, \ldots, t_N\} \qquad \qquad \text{.... (4)}$$

In one implementation, the current option price and the shifted option price may be determined using a Black-Scholes pricing method or a Monte-Carlo pricing method. In an example, for a Cliquet option consisting of one or more plain vanilla options, the current option price and the shifted option price for the option are determined by the option price determination module 216 using the equation (5), (6), (7) and (8) provided below. The current option price and the shifted option price are evaluated at trading time $T_{i-1}$.

$$V(T_{i-1}, \boldsymbol{x}) =$$
$$e^{-r(T_n - T_{i-1})} \sum_{j=1}^{N} (e^{r((t_j \vee T_{i-1}) - (t_{j-1} \vee T_{i-1}))} C_{BS}(x_j, x_{j-1}, t_{j-1} \vee T_{i-1}, t_j \vee T_{i-1})) \ , \ i \in$$
$$\{1, \ldots, n\}$$

$$\text{.... (5)}$$

*wherein, V($T_{i-1}$, $\boldsymbol{x}$) represents current option price at current trading time $T_{i-1}$ if $\boldsymbol{x} = S_{\boldsymbol{t} \wedge T_{i-1}}$, or shifted option price if*
*$\boldsymbol{x}$=exp(σ²γ_i) ∘ $S_{\boldsymbol{t} \wedge T_{i-1}}$,*
*$t_j$ and $t_{j-1}$ represents discrete-monitoring time instances,*

$T_n$ - $T_{i-1}$ is time to maturity from current trading time $T_{i-1}$,

$r$ represents the risk-free interest rate,

$\sigma$ represents the annualized volatility of the underlying asset,

$t$ represents the vector of discrete-monitoring time instances,

$t_{j-1} \vee T_{i-1}$ represents max $(t_{j-1}, T_{i-1})$,

$t_j \vee T_{i-1}$ represents max $(t_j, T_{i-1})$,

$(t \wedge T_{i-1}) = (t_1 \wedge T_{i-1}, t_2 \wedge T_{i-1},.., t_N \wedge T_{i-1})$, and

$\gamma_i = (t \wedge T_i) - (t \wedge T_{i-1})$ for every i = 1,...,n and the product $x \circ y$ is the Hadamard or element wise product of two vectors $x$ and $y$.

In the said example, the term ($C_{BS}$) represents Black-Scholes price of a plain vanilla option, and is computed using the equation (6) provided below.

$$C_{BS}(S_o, K, T_{i-1}, T_n) \triangleq S_o N(d_1) - e^{-r(T_n - T_{i-1})} K N(d_2) \qquad \dots (6)$$

wherein,

$$d_1 = \frac{ln\left(\frac{S_o}{K}\right) + \left(r + \frac{\sigma^2}{2}\right)(T_n - T_{i-1})}{\sigma\sqrt{(T_n - T_{i-1})}} \quad , \quad i \in \{1, \dots, n\} \qquad \dots (7)$$

$$d_2 = \frac{ln\left(\frac{S_o}{K}\right) + \left(r - \frac{\sigma^2}{2}\right)(T_n - T_{i-1})}{\sigma\sqrt{(T_n - T_{i-1})}} \quad , \quad i \in \{1, \dots, n\} \qquad \dots (8)$$

wherein, $T_n$ represents the last trading time instance or time to maturity,

$S_o$ represents spot price of underlying asset of the plain vanilla option,

$\sigma$ represents the annualized volatility of the underlying asset of the plain vanilla option,

$r$ represents the risk-free interest rate,

$T_n$ - $T_{i-1}$ is time to maturity from current trading time $T_{i-1}$,

$K$ represents the strike price of the plain vanilla option, and

$N(d_1)$ and $N(d_2)$ represents standard normal probability distribution function of intermediate terms $d_1$ and $d_2$.

The current option price and the shifted option price computed by the option price determination module 216 for the ECC may be stored as the parameter data 224 within the trading position evaluation system 102.

Based on the current option price and the shifted option price, the position evaluation module 116 of the trading position evaluation system 102 is configured to evaluate a trading position at each trading time instance in the underlying asset. The trading positions, thus evaluated, are globally optimum in the risk-neutral measure. As indicated earlier, the trading positions conveys to the trader, the number of units of the underlying asset to be held until the next trading time instance in the underlying asset. Thus, for the underlying asset, the trading positions evaluated at each of the trading time instances starting from the time of initialization of the ECC till the time to maturity when taken together allow the seller to achieve minimum global variance of profit and loss at the time of maturity. The position evaluation module 116 is configured to compute the trading position at a particular trading time instance using the equation (9) provided below.

$$\Delta_i^* = \frac{V\left(T_{i-1}, \exp(\sigma^2 \gamma_i) \circ S_{t \wedge T_{i-1}}\right) - V\left(T_{i-1}, S_{t \wedge T_{i-1}}\right)}{(e^{\sigma^2 \delta_i}) S_{i-1} - S_{i-1}} \quad , \quad i \in \{1, \dots, n\} \qquad \dots (9)$$

wherein, $\Delta_i^*$ represents trading position that are globally optimum in a risk-neutral measure

at $(i-1)^{th}$ trading time instance,

$V(T_{i-1}, S_{t \wedge T_{i-1}})$ represents current option price of the path-dependent ECC,

$S_{i-1}$ represents the current market price of the underlying asset,

$\sigma$ represents the annualized volatility,

$V(T_{i-1}, \exp(\sigma^2\gamma_i) \circ S_{t \wedge T_{i-1}})$ *represents shifted option price of the path-dependent ECC,*

$(e^{\sigma^2\delta_i})S_{i-1}$ *represents shifted price of the underlying asset at a trading time instance* $T_{i-1}$ ,

$(t \wedge T_{i-1}) = (t_1 \wedge T_{i-1}, t_2 \wedge T_{i-1}, .., t_N \wedge T_{i-1})$,

$\gamma_i$ *represents* $(t \wedge T_i)$ - $(t \wedge T_{i-1})$, *where* $t$ *is the vector of discrete-monitoring time instances, and*

$\delta_i$ *is the time difference between two consecutive trading time instances.*

The position evaluation module 116 evaluates the trading position at each trading time instance in the underlying asset. At the time of maturity, the trader liquidates the computed trading positions and delivers the payoff to the buyer. Taking an example of an ECC, a seller of the ECC gets premium ($\beta$) from the buyer and purchases $\Delta^*_1$ units of the underlying asset at price ($S_0$) at trading time instance ($T_0$). Thereafter, at trading time instance ($T_1$), the seller sells $\Delta^*_1$ units of the underlying asset at price ($S_1$) and repurchases $\Delta^*_2$ units of the underlying asset at price ($S_1$) and this continues till the time to maturity ($T_n$). The seller then, at the time of maturity ($T_n$) liquates the position, i.e., $\Delta^*_n$ units of the underlying asset at price ($S_n$) and delivers the payoff ($H$) to the buyer of the ECC. Thus, according to the present subject matter, the trading positions that are globally optimum in the risk-neutral measure are evaluated by using a simple analytical closed-form expression, i.e., the equation (9).

Although the above description has been described with reference to evaluating trading positions for a path-dependent European Contingent Claim (ECC), the trading position evaluation system 102 can be extended to hedge a portfolio with a hedging asset.

In case of a portfolio comprising of multiple path-dependent European Contingent Claims (ECC) and a hedging asset, the ECC data 110 may include data associated with all the path-dependent ECCs and their respective underlying assets. The constituent path-dependent ECCs may have different time to maturities. The ECC data 110, in this case, includes individual payoffs, time of initiations, time to maturities, premiums, prices of the underlying asset of each of the path-dependent ECCs known as spot prices, strike prices of the path-dependent ECCs, and current market prices of plain vanilla call and put options written on any one underlying asset with same time to maturity. The market data 114 consist of annualized volatilities of all the underlying assets in the portfolio and the risk-free interest rate of the market. The maximum of the time to maturities of the individual path-dependent ECCs of the portfolio could be the time to maturity of the portfolio.

The time to maturities of the constituent path-dependent ECCs may be taken as a plurality of discrete-monitoring time instances. To evaluate the globally optimum trading positions in the hedging asset, shifted portfolio price and current portfolio price are determined. The shifted portfolio price is the sum of the shifted prices of the constituent path-dependent ECCs at a trading time instance, compounded appropriately. Similarly, the current portfolio price is the sum of the current prices of the constituent path-dependent ECCs at a trading time instant. The individual option prices can be computed using conventional Black-Scholes pricing method or a Monte-Carlo pricing method. Thereafter, the shifted portfolio prices and the current portfolio prices are used to compute the trading positions in the hedging asset at the each trading time instance.

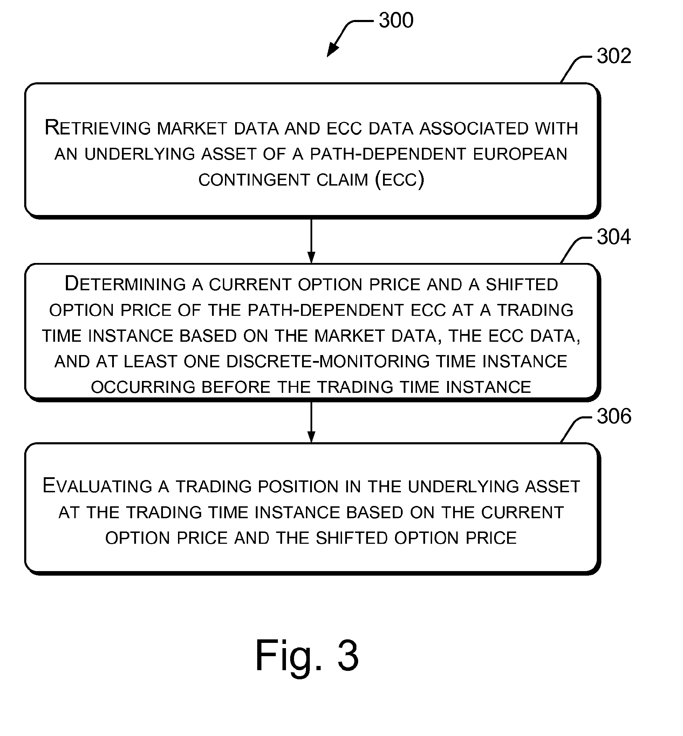

Fig. 3 illustrates a method 300 for evaluating trading positions for a path-dependent European Contingent Claim (ECC), according to an embodiment of the present subject matter. The method 300 is implemented in computing device, such as a trading position evaluation system 102. The method may be described in the general context of computer executable instructions. Generally, computer executable instructions can include routines, programs, objects, components, data structures, procedures, modules, functions, etc., that perform particular functions or implement particular abstract data types. The method may also be practiced in a distributed computing environment where functions are performed by remote processing devices that are linked through a communications network.

The order in which the method is described is not intended to be construed as a limitation, and any number of the described method blocks can be combined in any order to implement the method, or an alternative method. Furthermore, the method can be implemented in any suitable hardware, software, firmware or combination thereof.

At block 302, the method 300 includes retrieving ECC data 110 and market data 114 associated with an underlying asset of a path-dependent ECC. The ECC data 110 may include the data associated with the path-dependent ECC such as, its payoff *(H)*, time of initiation *($T_0$)*, time to maturity *($T_n$)*, a plurality of discrete-monitoring time instances that lie between the time of initiation *($T_0$)* and time to maturity *($T_n$)* of the path-dependent ECC, premium *($\beta$)*, spot price, strike price *(K)* and current market prices of call and put options written on the underlying asset of the path-dependent ECC at same time to maturity. The market data 114 includes the annualized volatility *($\sigma$)* of the underlying asset and the risk-free interest rate *(r)* of the market.

At block 304 of the method 300, a current option price and a shifted option price of the path-dependent ECC are determined. The current option price and the shifted option price of the path-dependent ECC are determined at a trading time instance based on the ECC data 110, the market data 114, and at least one discrete-monitoring time instance occurring before the trading time instance. The trading time instance is provided by a trader of the path-dependent ECC. In accordance with one implementation of the present subject matter, the option price determination module 216 determines the current option price and the shifted option price of the path-dependent ECC.

At block 306 of the method 300, a trading position in the underlying asset at the trading time instance is evaluated based on the current option price and the shifted option price. The evaluated trading position is globally optimum in a risk-neutral measure. Such a trading position is also referred as globally optimum trading position in the present description. In one implementation, the position evaluation module 116 evaluates the globally optimum trading position in the underlying asset based on the equation (9) described in the previous section.

The method blocks described above are repeated at each of a plurality of trading time instance provided by the trader to evaluate the trading positions at each trading time instance. At the last trading time instance, the trader such as the seller of the path-dependent ECC liquidates the underlying asset and delivers the payoff to the buyer in order to minimize the global variance of profit and loss at the time of maturity of the path-dependent ECC.

Although the method 300 has been described with reference to evaluating trading positions for a path-dependent European Contingent Claim (ECC), it is well appreciated that trading position, in accordance with the present subject matter, can be evaluated for hedging a portfolio of multiple path-dependent European Contingent Claims (ECCs) with a hedging asset..

Although embodiments for methods and systems for evaluating trading positions that are globally optimum for path-dependent ECCs have been described in a language specific to structural features and/or methods, it is to be understood that the invention is not necessarily limited to the specific features or methods described. Rather, the specific features and methods are disclosed as exemplary embodiments for evaluating the globally optimum trading positions for path-dependent options.

**Claims**

1. A trading position evaluation system (102) comprising:

   a processor (202);
   an option price determination module (216) coupled to the processor (202), the option price determination module (216) configured to determine a current option price and a shifted option price of a path-dependent European Contingent Claim (ECC) based on ECC data (110) and market data (114),
   wherein the ECC data (110) comprises data associated with the path-dependent ECC and an underlying asset of the path-dependent ECC, and the market data (114) comprises annualized volatility of the underlying asset and risk-free interest rate of market, and
   wherein the current option price and the shifted option price are determined at a trading time instance, selected from amongst a plurality of trading time instances obtained from a trader, based on at least one discrete-monitoring time instance occurring before the trading time instance; and
   a position evaluation module (116) configured to evaluate a trading position in the underlying asset at the trading time instance based on the current option price and the shifted option price, wherein the trading position minimizes global variance of profit and loss to the trader.

2. The trading position evaluation system (102) as claimed in claim 1 further comprising a volatility computation module (212) is configured to:

   retrieve historical data (112) of the underlying asset, wherein the historical data (112) comprises historical market prices of the underlying asset;
   compute log-returns of the underlying asset based on the historical data (112);
   generate a plurality of scenarios based on fitting the log-returns into a best-fit distribution;
   fit the plurality of scenarios to a normal distribution to compute volatility of the underlying asset; and
   annualize the volatility to obtain the annualized volatility.

3. The trading position evaluation system (102) as claimed in claim 1, wherein the ECC data (110) comprises time of initiation of the path-dependent ECC, time to maturity of the path-dependent ECC, a plurality of discrete-monitoring time instances that lie between the time of initiation and time to maturity of the path-dependent ECC, premium, spot price of the underlying asset, strike price of the path-dependent ECC, and current market price of plain vanilla call and put options written on the underlying asset of the path-dependent ECC.

4. The trading position evaluation system (102) as claimed in claim 1 further comprising an interest rate calculation module (214) configured to calculate the risk-free interest rate of the market based on the ECC data (110).

5. The trading position evaluation system (102) as claimed in claim 2, wherein the best-fit distribution is any one of a Normal distribution, a Poisson distribution, and a T-distribution.

6. The trading position evaluation system (102) as claimed in claim 1, wherein the position evaluation module (116) is further configured to evaluate a trading position in a hedging asset for a portfolio comprising a plurality of path-dependent European Contingent Claims (ECCs).

7. A computer-implemented method for evaluating trading positions for a path-dependent European Contingent Claim (ECC), wherein the method comprises:

receiving a plurality of trading time instances from a trader;
retrieving ECC data (110) and market data (114) associated with the path-dependent ECC from a database (108), wherein the ECC data (110) comprises data associated with the path-dependent ECC and an underlying asset of the path-dependent ECC, and the market data (114) comprises annualized volatility of the underlying asset and risk-free interest rate of market;
computing a current option price and a shifted option price of the path-dependent ECC at a trading time instance, selected from amongst the plurality of trading time instances based on the ECC data (110), the market data (114), and at least one discrete-monitoring time instance occurring before the trading time instance; and
evaluating a trading position in the underlying asset at each of the plurality of trading time instances based on the current option price and the shifted option price, wherein the trading position minimizes global variance of profit and loss to the trader.

8. The method as claimed in claim 7 further comprising:

retrieving historical data (112) for a predefined period from the database (108);
evaluating log-returns of the underlying asset based on the historical data (112);
generating a plurality of scenarios based on fitting the log-returns into a best-fit distribution;
fitting the plurality of scenarios to a normal distribution to compute the volatility of the underlying asset; and
annualizing the volatility to obtain the annualized volatility.

9. The method as claimed in claim 8, wherein the historical data (112) comprises historical market prices of the underlying asset obtained from a data source.

10. The method as claimed in claim 7, wherein the ECC data (110) comprises time of initiation of the path-dependent ECC, time to maturity of the path-dependent ECC, a plurality of discrete-monitoring time instances that lie between the time of initiation and time to maturity of the path-dependent ECC, premium, spot price of the underlying asset, strike price of the path-dependent ECC, and current market price of plain vanilla call and put options written on the underlying asset of the path-dependent ECC.

11. The method as claimed in claim 7 further comprising calculating the risk-free interest rate of the market based on the ECC data (110).

12. A non-transitory computer-readable medium having embodied thereon a computer program for executing a method comprising:

receiving a plurality of trading time instances from a trader;
retrieving ECC data (110) and market data (114) associated with a path-dependent ECC from a database (108), wherein the ECC data (110) comprises data associated with the path-dependent ECC and an underlying asset of the path-dependent ECC, and the market data (114) comprises annualized volatility of the underlying asset and risk-free interest rate of market;
computing a current option price and a shifted option price of the path-dependent ECC at a trading time instance, selected from amongst the plurality of trading time instances based on the ECC data (110), the market data (114), and at least one discrete-monitoring time instance occurring before the trading time instance; and
evaluating a trading position in the underlying asset at each of the plurality of trading time instances based on the current option price and the shifted option price, wherein the trading position minimizes global variance of profit and loss to the trader.

Fig. 1

TRADING POSITION EVALUATION SYSTEM 102

PROCESSOR(S)
202

INTERFACE(S)
204

MEMORY 206

MODULE(S) 208

VOLATILITY COMPUTATION MODULE 212

INTEREST RATE CALCULATION MODULE 214

OPTION PRICE DETERMINATION MODULE 216

POSITION EVALUATION MODULE 116

OTHER MODULE(S) 218

DATA 210

ECC DATA
110

HISTORICAL DATA
112

MARKET DATA
114

PARAMETER DATA
224

OTHER DATA
226

# Fig. 2

Fig. 3

Europäisches
Patentamt

European
Patent Office

Office européen
des brevets

# EUROPEAN SEARCH REPORT

Application Number

EP 13 17 3201

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/290461 A1 (ROTHSCHILD LEIGH M [US]) 15 November 2012 (2012-11-15) * the whole document * | 1-12 | INV. G06Q40/04 |

-----

TECHNICAL FIELDS SEARCHED (IPC)

G06Q

The present search report has been drawn up for all claims

| Place of search | Date of completion of the search | Examiner |
|---|---|---|
| Munich | 28 November 2013 | Gardiner, Alexander |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 13 17 3201

This annex lists the patent family members relating to the patent documents cited in the above-mentioned European search report.
The members are as contained in the European Patent Office EDP file on
The European Patent Office is in no way liable for these particulars which are merely given for the purpose of information.

28-11-2013

| Patent document cited in search report | Publication date | Patent family member(s) | Publication date |
|---|---|---|---|
| US 2012290461 A1 | 15-11-2012 | NONE | |

EPO FORM P0459

For more details about this annex : see Official Journal of the European Patent Office, No. 12/82